# EUROPEAN PATENT APPLICATION

(11) **EP 4 280 323 A1**
(43) Date of publication of application: **22.11.2023**
(21) Application number: 22173959.2
(22) Date of filing: 18.05.2022
(51) Int. Cl.: H01M 8/04186, H01M 8/04276, H01M 8/18

(54) **IRON REDOX FLOW BATTERY**

(71) Applicant: VoltStorage GmbH, 81379 München (DE)
(72) Inventor: Alper, John, 81371 München (DE); Bosch, Hannah, 81371 München (DE); Peither, Michael, 81675 München (DE)
(74) Representative: Grünecker Patent- und Rechtsanwälte PartG mbB

(57) **Abstract**

The invention relates to an all-iron redox flow battery comprising a first electrolyte tank configured to contain a first electrolyte solution and a second electrolyte tank configured to contain a second electrolyte solution; a flow cell comprising a negative flow half-cell configured for passing through first electrolyte solution and a positive flow half-cell configured for passing through second electrolyte solution; a third electrolyte tank, distinct from the first and second electrolyte tanks, configured to contain a third electrolyte solution, wherein the battery is configured to selectively provide fluid communication of the third electrolyte tank with at least one of the first electrolyte tank and the second electrolyte tank; and a rebalancing cell comprising a negative rebalancing half-cell and a positive rebalancing half-cell, wherein the negative rebalancing half-cell is configured to receive hydrogen gas from the first electrolyte tank and/or from a separate hydrogen source, and wherein the positive rebalancing half-cell is configured for passing through third electrolyte solution, whereby the rebalancing cell is configured to lower a pH of the third electrolyte solution.

## Description

### Field of the Invention

The invention relates to an iron redox flow battery and a related rebalancing and refreshing method.

### Prior Art

Different redox flow batteries are known in the art. A particular type is the all-iron redox flow battery which has the advantage of being cost efficient due to using only iron in different oxidation states as the electrolyte.

During charging of an all-iron redox flow battery, molecular hydrogen H₂ is generated from protons H⁺ on the negative flow half-cell. However, this process is not reversed during discharging of the battery, leading to an imbalance of state of charge in the tanks including the negative and positive electrolyte solution, respectively. In order to control the pH of the negative electrolyte solution, it was proposed to use an acid that is titrated into the negative electrolyte. This is disadvantageous since it requires another fluid and may involve a significant downtime of the battery.

Further, it has been described in the art to use an acid to flush the iron battery cells in order to remove deposited Fe(OH)₃. This is disadvantageous as is also requires a separate liquid.

### Description of the Invention

It is the object of the present invention to overcome at least some of the above mentioned disadvantages.

This object is achieved by an all-iron redox flow battery according to claim 1.

The all-iron redox flow battery according to the invention comprises a first electrolyte tank configured to contain a first electrolyte solution and a second electrolyte tank configured to contain a second electrolyte solution; a flow cell comprising a negative flow half-cell configured for passing through first electrolyte solution and a positive flow half-cell configured for passing through second electrolyte solution; a third electrolyte tank, distinct from the first and second electrolyte tanks, configured to contain a third electrolyte solution, wherein the battery is configured to selectively provide fluid communication of the third electrolyte tank with at least one of the first electrolyte tank and the second electrolyte tank; and a rebalancing cell comprising a negative rebalancing half-cell and a positive rebalancing half-cell, wherein the negative rebalancing half-cell is configured to receive hydrogen gas from the first electrolyte tank and/or from a separate hydrogen source, and wherein the positive rebalancing half-cell is configured for passing through third electrolyte solution, whereby the rebalancing cell is configured to lower a pH of the third electrolyte solution.

The rebalancing cell can be used to transfer protons from the negative rebalancing half-cell to the third electrolyte solution passing through the positive rebalancing half-cell. Thus, the pH of the third electrolyte solution in the third tank can be lowered. This low pH electrolyte solution can then be used to rebalance the state of charge in the first and second electrolyte tanks. The all-iron redox flow battery involves only solutions of iron in different oxidation states as electrolytes.

In a development, the battery may be further configured to selectively provide fluid communication of the third electrolyte tank with at least one of the negative flow half-cell and the positive flow half-cell. This has the advantage that the low pH electrolyte can be used to clean the flow cell.

In a further development, in an initial discharged state the first, second and third electrolyte solutions may include only iron(II)-chloride. Therefore, in this initial state, the first, second and third electrolyte solutions may be identical.

According to another development, the all-iron redox flow battery may be configured to perform one or more of the following operations: circulating the third electrolyte solution through the positive rebalancing half-cell and the third electrolyte tank; and/or transferring a quantity of second electrolyte solution from the second electrolyte tank to the third electrolyte tank; and/or transferring a quantity of third electrolyte solution from the third electrolyte tank to the second electrolyte tank; and/or circulating a quantity of electrolyte solution from the third electrolyte tank to the second electrolyte tank and the same quantity of second electrolyte solution from the second electrolyte tank to the third electrolyte tank; and/or transferring a quantity of electrolyte solution from the third electrolyte tank to the first electrolyte tank during a charging process of the all-iron redox flow battery.

In another development, the all-iron redox flow battery may comprise a pH sensor for monitoring a pH of the first electrolyte solution. A measured value of the pH (e.g., at or above a threshold value) can then be used to determine whether third electrolyte solution shall be transferred to the first tank.

According to another development, the all-iron redox flow battery may comprise means to determine a state of charge imbalance between the first and second electrolyte tanks, in particular sensors for determining a Fe³⁺ concentration in the second electrolyte solution and a Fe²⁺ concentration in the first electrolyte solution. Upon detection of a state of charge imbalance, third electrolyte solution can be used to remove the imbalance.

In another development, the all-iron redox flow battery may comprise further flow cells forming a stack of flow cells, and may comprise a sensor to monitor an electrical resistance of the stack of flow cells, wherein the all-iron redox flow battery is configured to transfer third electrolyte to the negative flow half-cells and to the positive flow half-cells if the resistance is equal or larger than a predefined threshold.

According to another development, the all-iron redox flow battery may comprise further stacks of flow cells, wherein the all-iron redox flow battery may be configured to separately transfer third electrolyte to each stack of flow cells. This avoids any downtime of the battery.

In another development, the all-iron redox flow battery may comprise a monitoring and control system (90) configured to monitor physical parameters of at least one of the first, second and third electrolyte solution, such as pH, Fe2+ concentration, Fe3+ concentration, stack resistance, and configured to control circulating and transferring operations of the solutions in response to values of the monitored parameters.

The invention further provides a method according to claim 10.

The method according to the invention comprises the following steps: providing a first electrolyte tank containing a first electrolyte solution and a second electrolyte tank containing a second electrolyte solution; passing first electrolyte solution through a negative flow half-cell of a flow cell and passing second electrolyte solution through a positive flow half-cell of the flow cell; providing a third electrolyte tank, distinct from the first and second electrolyte tanks, and containing a third electrolyte solution; providing a rebalancing cell comprising a negative rebalancing half-cell and a positive rebalancing half-cell, and receiving hydrogen gas from the first electrolyte tank and/orfrom a separate hydrogen source by the negative rebalancing half-cell, and selectively passing third electrolyte solution through the positive rebalancing half-cell, thereby lowering a pH of the third electrolyte; and selectively providing fluid communication of the third electrolyte tank with at least one of the first electrolyte tank and the second electrolyte tank.

The advantages of the method according to the invention and its developments defined hereinafter corresponds to the advantages given above for the battery according to the invention and the respective developments. In order to avoid repetition, the discussion thereof is omitted.

The method according to the invention can be developed in that it may further comprise selectively providing fluid communication of the third electrolyte tank with the negative flow half-cell and the positive flow half-cell.

According to a further development, the method may further comprise one or more of the following steps: transferring a quantity of second electrolyte from the second electrolyte tank to the third electrolyte tank; and/or transferring a quantity of third electrolyte from the third electrolyte tank to the second electrolyte tank; and/or circulating a quantity of electrolyte from the third electrolyte tank to the second electrolyte tank and the same quantity of second electrolyte from the second electrolyte tank to the third electrolyte tank.

In another development, the method may further comprise the step of monitoring a pH of the first electrolyte solution during a charging process of the all-iron redox flow battery, and if the pH is at or above a threshold value, transferring a quantity of electrolyte from the third electrolyte tank to the first electrolyte tank.

According to a another development, the method may further comprise determining a state of charge imbalance between the first and second electrolyte tanks, in particular including measuring a Fe³⁺ concentration in the second electrolyte solution and a Fe²⁺ concentration in the first electrolyte solution and, based on the determined state of charge imbalance, transferring a corresponding quantity of second electrolyte from the second electrolyte tank to the third electrolyte and transferring an equal quantity of third electrolyte from the third electrolyte tank to the second electrolyte tank to achieve a state of charge balance between the first and second electrolyte tanks.

In another development, the method may further comprise monitoring an electrical resistance of one or more stacks of flow cells, and transferring third electrolyte to the negative flow half-cells and to the positive flow half-cells if the resistance is equal or larger than a predefined threshold, in particular separately transferring third electrolyte to each stack of flow cells.

Further features and exemplary embodiments as well as advantages of the present invention will be explained in greater detail hereinafter by means of the drawings in the following. It is understood that the embodiments do not exhaust the field of the present invention. It is further clear that some or all of the features described in the following can also be combined with each other in a different way.

### Brief Description of the Drawings

- Fig. 1: shows a general layout of an all-iron redox flow battery.
- Fig. 2: shows an example of the Pourbaix diagram for iron species.
- Fig. 3: shows a comparison of coulombic efficiency vs. negative electrolyte pH for an all-iron redox flow battery system.
- Fig. 4: shows a first embodiment of an all-iron redox flow battery according to the invention.
- Fig. 5: shows a second embodiment of an all-iron redox flow battery according to the invention.
- Fig. 6: shows a third embodiment of an all-iron redox flow battery according to the invention.
- Fig. 7: shows a flow chart of a rebalancing tank implementation for electrolyte rebalancing.
- Fig. 8: shows a flow chart summarizing use of the rebalancing tank electrolyte in cell cleaning and negative electrolyte pH control.
- Fig. 9: shows a diagram of voltaic efficiency vs. cycle number for an all-iron redox flow battery.

### Embodiments

The invention is described in detail for the following embodiments with respect to the accompanying figures, including the rebalancing and refreshing technique for the all-iron redox flow cells and batteries, in order to ensure a long lifetime and maintain the State of Health of the electrolyte.

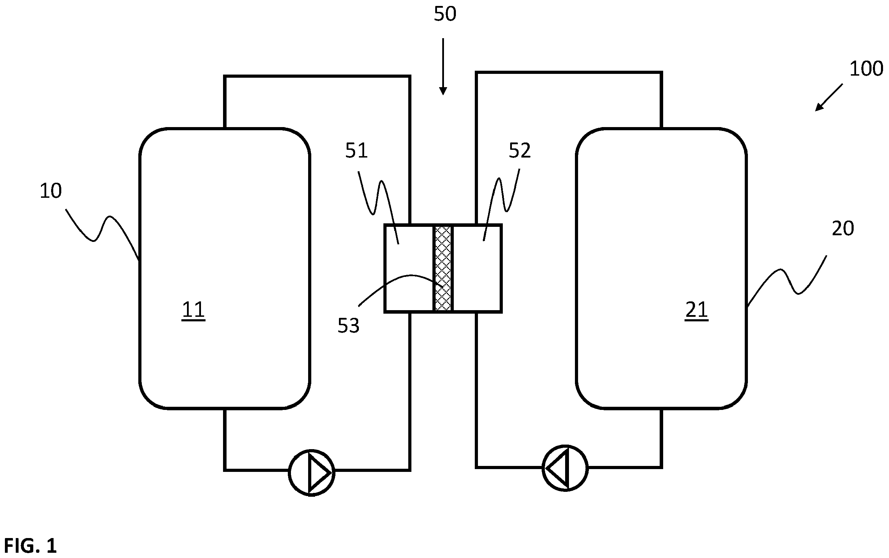

A basic schematic representation of an all-iron redox flow battery forming the basis of the all-iron redox flow battery according to the invention is depicted in Fig. 1. It comprises two separate tanks, one tank 10 containing a (liquid) negative electrolyte solution 11 and the second tank 20 containing a (liquid) positive electrolyte solution 21, whereas the tank 20 containing the positive electrolyte 21 encompasses a volume that is a factor of 1.0-2.0 larger than the volume of the tank 10 containing the negative electrolyte solution 11.

These two tanks are in direct fluidic connection to the flow battery cell 50 which comprises of a negative half-cell 51 where the half reaction 1)

1) Fe²⁺ + 2e⁻ ←→ Fe⁰

takes place, and a positive half-cell 52 where the half reaction 2)

2) Fe²⁺ ←→ Fe³⁺ + e⁻

takes place. The half-cells 51, 52 are in ionic and/or fluidic connection with each other through a (ion conductive) membrane or (porous) separator 53. Each half-cell also contains an electrically conductive electrode (not shown) at the opposite side in relation to the membrane/separator which have an opposing (electric) polarity in accordance to the designation of the respective half-cell polarity (positive or negative) and form the two electrical connection poles/terminals of this battery cell. Through these two electrodes, the cell is connected electrically to a circuit. In order to increase the voltage and/or power of this battery system, multiple cells can be stacked on top of each other, whereas the (monopolar) electrode of one half-cell will become also the electrode of the half-cell of the opposing polarity of the next adjoining cell. Every half-cell also incorporates at least one fluidic inlet and at least one fluidic outlet, such that it is connected fluidically to the electrolyte tank of the same polarity (positive or negative).

The negative electrolyte solution and the negative tank are also referred to as first electrolyte solution and first tank, respectively, and the positive electrolyte solution and the positive tank are also referred to as second electrolyte solution and second tank, respectively.

In normal operations, the positive liquid electrolyte solution 21 is continuously pumped through the positive half-cell(s) 52 and the negative liquid electrolyte solution 11 is continuously pumped through the negative half-cell(s) 51. Both electrolytes in the (initial) discharged state are identical and contain iron(II)-chloride in an aqueous solution. During the charging process (when a potential high enough is applied to both the electrodes to start the reaction), on the negative electrode, iron(II) is reduced to (elementary) iron(0) in a two-electron reaction (described in reaction 1), whereas on the positive electrode, iron(II) is oxidized to iron(III) (described in reaction 2). The solid elementary iron(0) remains at the negative electrode (plating reaction), while on the other side the iron(III) is still dissolved in the aqueous solution as iron(III)-chloride. These reactions are reversed during the discharging process. Per mol of iron involved in each half-cell reaction on the negative side, there has to be two mol of iron involved in the half-cell reaction in the positive side.

Due to the negative potential on the negative half-cell electrode (standard potential -0.44 V) and the pH value of the solution, a parasitic hydrogen (ion) evolution reaction (*HER*) takes place during the charge process of the all-iron redox flow battery system. As a result of the availability of free electrons on the electrode surface, reaction 3)

3) 2H⁺ +2e⁻ ←→ H₂

takes place at the negative electrode (directly coupled electrically to the charging half reaction 2) and hydrogen in gaseous state is evolved at the negative electrode. The pH value of the negative electrolyte is subsequently increasing during each charging step.

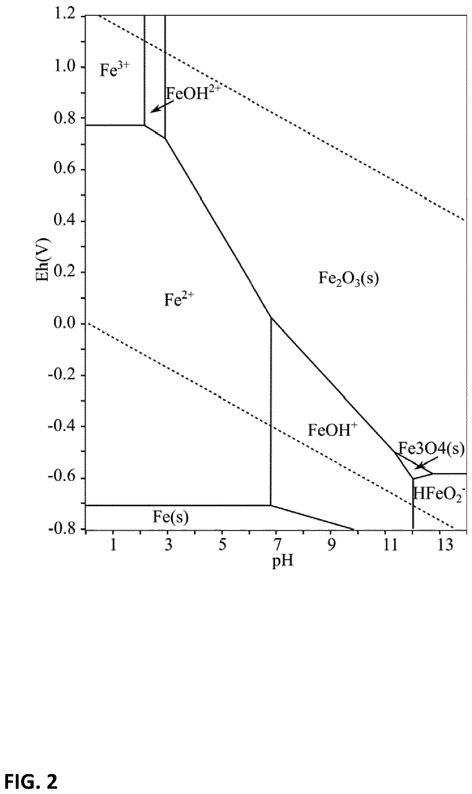

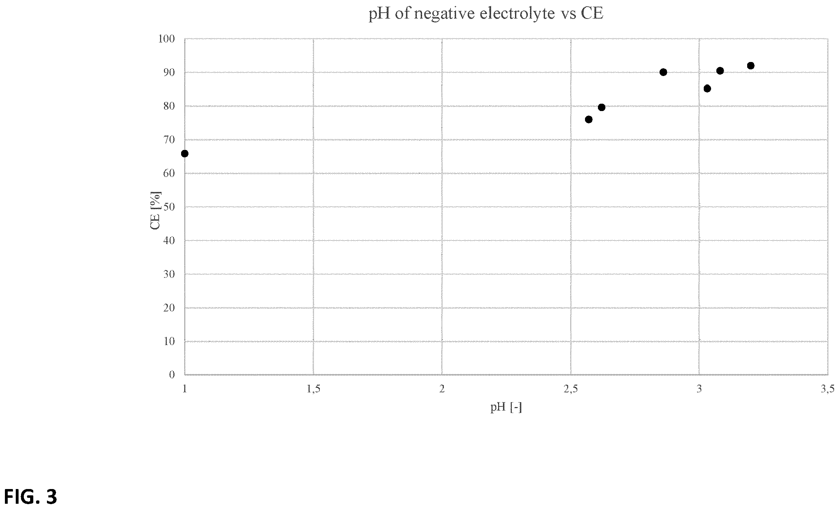

During operation and due to the selectivity of the separator/membrane 53 not reaching 100%, some Fe³⁺ will also crossover from the positive half-cell 52 into the negative half-cell 51 through the membrane/separator 53. When the pH value and/or potential of the negative electrolyte exceeds the thermodynamic value as described in the Pourbaix diagram (Fig. 2), the Fe³⁺ species in the negative half-cell precipitate as Fe(OH)₃, blocking the pores of the membrane/separator 53 (decrease in the ion conductivity) and, as a result, leading to a decrease in voltaic efficiency of the cell during cycling. As can be seen in Fig. 3, a pH value in the negative half-cell and electrolyte above the Fe(OH)₃ precipitation threshold is beneficial for the coulombic efficiency of the battery. Fig. 3 shows a comparison of coulombic efficiency vs. negative electrolyte pH for an all-iron redox flow battery system.

However, a pH value in the negative half-cell 51 and negative electrolyte 11 that is too high (depending on the potential, but generally >3 - 7) may lead to precipitation of Fe²⁺ species as Fe₂O₃ (as shown in the Pourbaix diagram in Fig. 2), leading ultimately to a battery failure.

In addition to the mentioned Fe(OH)₃ precipitation issues, side half reaction 3) coupled to charging reaction 2), also leads to an imbalance of the electrolyte. The charge "wasted" on the HER side reaction is not used to reduce Fe²⁺ to Fe° and thus the whole system accumulates more Fe³⁺ species in the positive electrolyte 21 than corresponding Fe° on the negative half-cell 51 (since the H₂ evolution is not reversed during the discharging process). Over time this leads to a decrease in the coulombic storage capacity of the all-iron redox flow battery system.

These problems are solved in the present invention, which will be further described below.

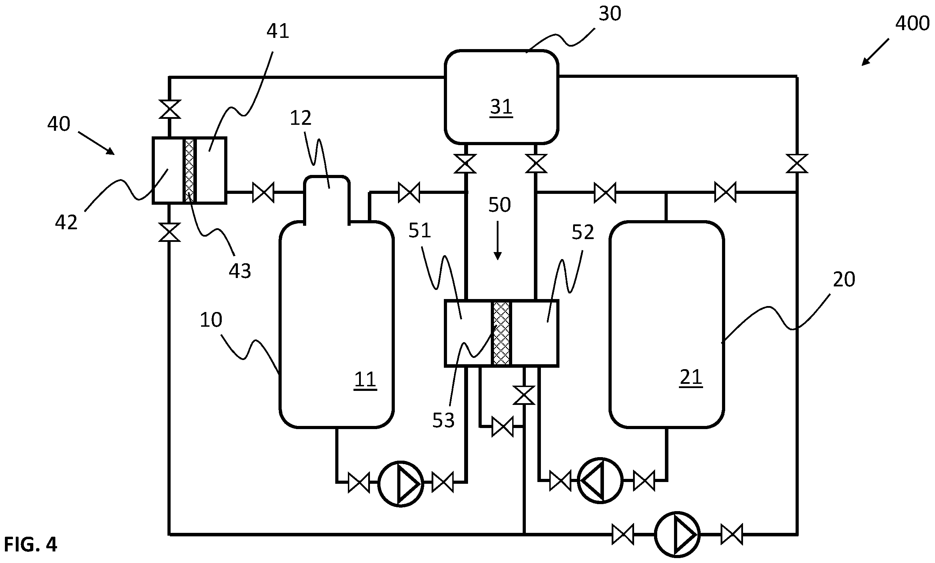

A first embodiment of the all-iron redox flow battery according to the invention is shown in Fig. 4.

The all-iron redox flow battery 400 according to the first embodiment comprises a first electrolyte tank 10 configured to contain a first electrolyte solution 11 and a second electrolyte tank 20 configured to contain a second electrolyte solution 21; a flow cell 50 comprising a negative flow half-cell 51 configured for passing through first electrolyte solution 11 and a positive flow half-cell 52 configured for passing through a second electrolyte solution 21; and a third electrolyte tank 30, distinct from the first and second electrolyte tanks 10, 20, configured to contain a third electrolyte solution 31, wherein the battery is configured to selectively provide fluid communication of the third electrolyte tank 30 with at least one of the first electrolyte tank 10 and the second electrolyte tank 20. The negative flow half-cell 51 and the positive flow half-cell 52 are separated by a membrane/separator 53.

The all-iron redox flow battery 400 further comprises a rebalancing cell 40, in particular an iron hydrogen fuel cell, comprising a negative rebalancing half-cell 41 and a positive rebalancing half-cell 42, wherein the negative rebalancing half-cell 41 is configured to receive hydrogen gas from the first electrolyte tank 10, and wherein the positive rebalancing half-cell 42 is configured for passing through third electrolyte solution 31, whereby the rebalancing cell 40 is configured to lower the pH of the third electrolyte solution 31. The negative rebalancing half-cell 41 and the positive rebalancing half-cell 42 are separated by an ion permeable membrane 43. The third electrolyte tank 30 is sometimes also designated as the rebalancing tank 30 in the following.

The rebalancing cell 40 can be used to transfer protons from the negative rebalancing half-cell 41 to the third electrolyte solution 31 passing through the positive rebalancing half-cell 42. Thus, the pH of the third electrolyte solution 31 in the third tank 30 can be lowered. This low pH electrolyte solution 31 can then be used to rebalance the state of charge in the first and second electrolyte tanks 10, 20.

In order to direct the fluid flows, conduits with pumps and valves are provide, which can be operated as required.

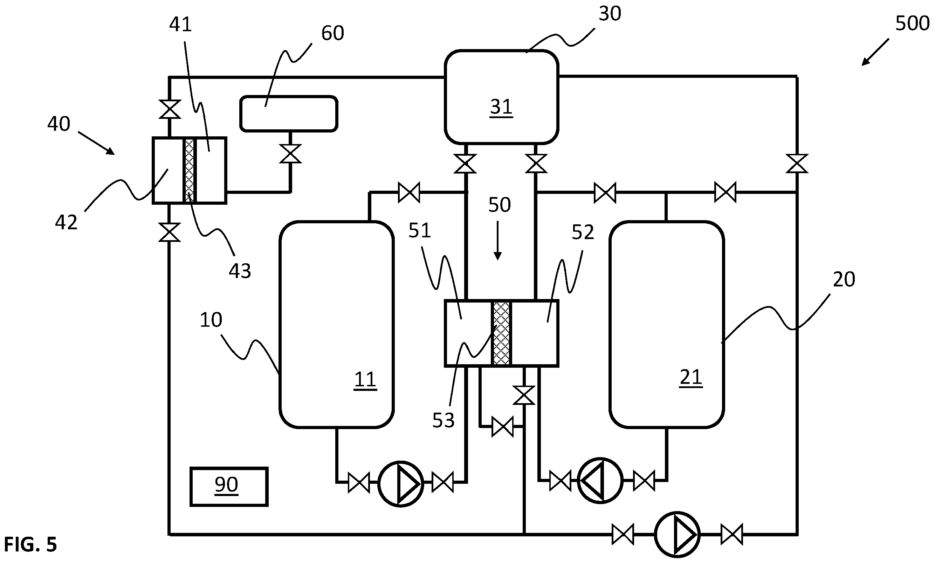

A second embodiment 500 of the all-iron redox flow battery according to the invention is shown in Fig. 5.

The only difference to the embodiment of Fig. 4 is that a separate hydrogen source 60 is provided, such that the rebalancing half-cell 41 receives hydrogen from the hydrogen source 60, rather than from the headspace of the first tank 10. Further, a monitoring and control system 90 is provided. It is configured to monitor physical parameters of at least one of the first, second and third electrolyte solutions, such as pH, Fe²⁺ concentration, Fe³⁺ concentration, stack resistance, and controls the circulating and transferring operations of the solutions in response to values of the monitored parameters.

Similarly, also the embodiment 400 of Fig. 4 may comprise a monitoring and control system 90.

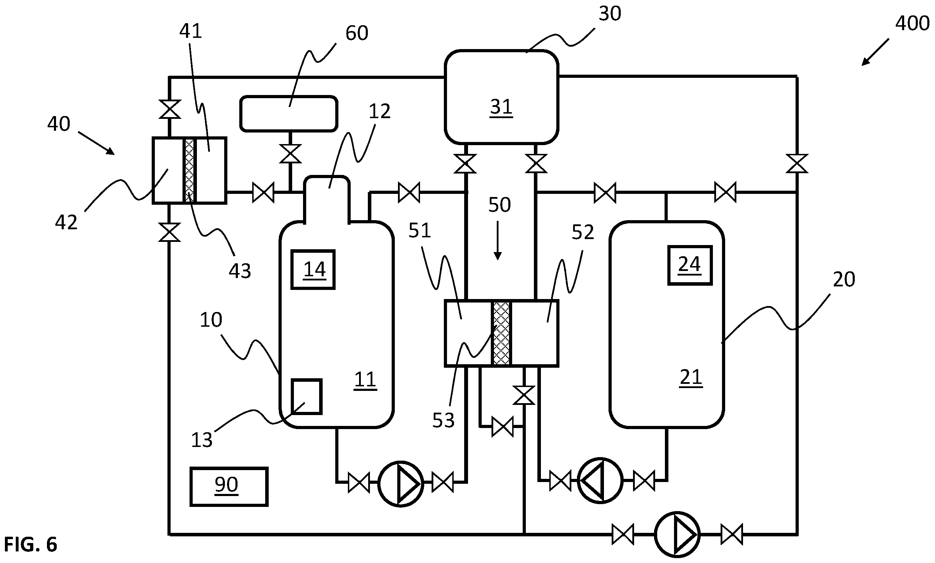

A third embodiment 600 of the all-iron redox flow battery according to the invention is shown in Fig. 6.

This differs from the embodiments of Fig. 4 and Fig. 5 in that the rebalancing half-cell 41 may receive hydrogen from the hydrogen source 60, as well as from the headspace 12 of the first tank 10.

Moreover, in this embodiment, a pH sensor 31 is provided to measure pH of the first electrolyte solution and the sensors 14 and 24 measure ion concentrations in the first and second tank, respectively. The monitoring and control system 90 may then determine a state of charge imbalance and initiate measures to rebalance the state of charge.

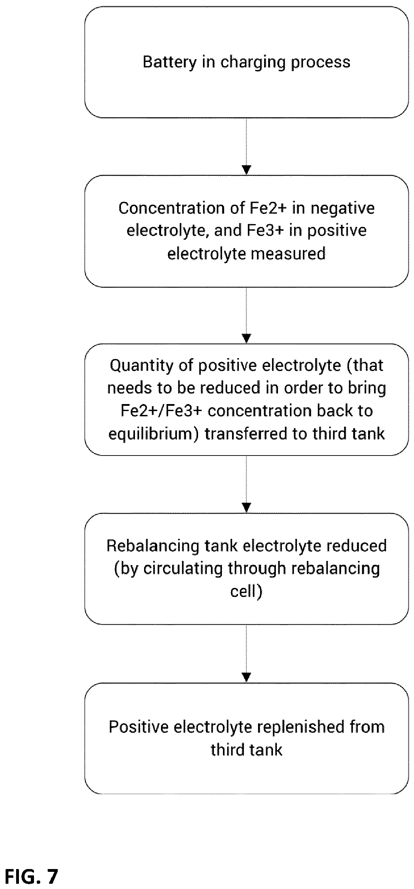

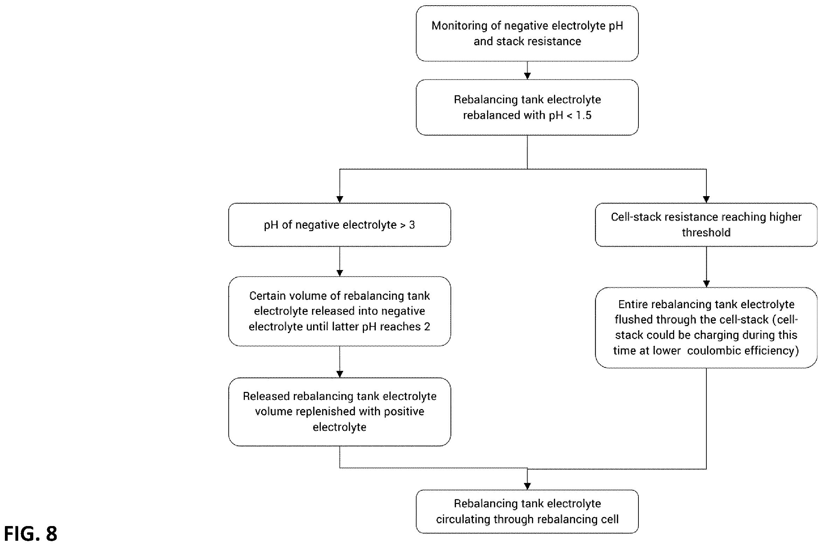

The embodiments of Fig. 4, 5 and 6 are now described in more detail, and with reference to the flow diagrams in Fig. 7 and Fig. 8, also the method of operating the all-iron redox flow battery (rebalancing and refreshing method) according to the invention are described.

### Rebalancing

The present invention describes an all-iron redox flow battery system which includes a third tank (rebalancing tank) within the previously described all-iron redox flow battery and a monitoring and control system. This new configuration and control system enables the use of a single electrolyte (without additional acids) and a classic iron-hydrogen fuel cell running reaction 4)

4) H₂ + 2Fe³⁺ → 2H⁺ + 2Fe²⁺

to perform cell cleaning, pH balancing, and electrolyte rebalancing all in one system/process. In doing so it reduces service requirements for the all-iron redox flow battery system (as no consumable acid requiring periodic replacement is used) and enables the all-iron redox flow battery system to be returned to the initial state of health after every cycle, without battery downtime.

In one embodiment of the present invention, shown in Fig. 4, there is an all-iron redox flow battery system, comprised of the cell and its two half cells 51 and 52, of which the positive half-cell 52 is fed by the positive electrolyte tank 20 and the negative half-cell 51 is fed by the negative electrolyte tank 10. An electrolyte flow between the tanks and the half cells are established by electrolyte pumps.

The rebalancing tank 30 is in fluidic connection to the positive electrolyte tank 20, the negative half-cell 51 and the positive half-cell 52 of the all-iron redox flow battery, and the positive half-cell 42 of the iron-hydrogen fuel cell 40. The negative half-cell 41 of the iron-hydrogen fuel cell 40 is connected via a gas connection to the internal hydrogen reservoir 12 which holds the hydrogen gas generated during the charging reaction and accumulating in the headspace of the negative electrolyte tank 10. In other embodiments of the present invention (Fig. 5 and Fig. 6), an external hydrogen source 60 or the combination of an internal 12 and external 60 hydrogen source may be used to supply hydrogen gas to the iron-hydrogen fuel cell 40, but the operational principles are identical between the three embodiments.

The operation of rebalancing tank battery health maintenance system is summarized by the flow charts in Fig. 7 and Fig. 8.

In the initial battery state, all three tanks (the positive and negative electrolyte tanks 20, 10 and the rebalancing tank 30) contain solutions of Fe²⁺ species and other additives. The initial pH of the positive tank 20 is in the range 1-2, the pH of the negative tank 10 is in the range 2-3 and the pH of the rebalancing tank is in the range -0.5-0.5. In one embodiment of the present invention, during charging, the pH of the negative tank is continuously monitored. If the pH goes above the threshold value of 3, low pH electrolyte from the rebalancing tank is transferred to the negative tank (through opening a respective valve) and is mixed with the negative electrolyte before entering the cell or cell-stack until a pH of 2 is reached.

Alternatively, it is possible that a predictive algorithm based on the pH of the negative electrolyte, the pH of the rebalancing tank, and previous performance measurements (such as current and voltage) of the all-iron redox flow battery system, is used to control the addition of low pH electrolyte from the rebalancing tank to the negative electrolyte during charging. In one embodiment of the present invention, hydrogen generated in the HER during charging is captured in the negative electrolyte tank headspace and subsequently held in the in-tank hydrogen storage unit (Fig. 4).

In the second embodiment of Fig. 5, the hydrogen generated in the HER during charging is not used further (consumed by a controlled burn in a flame or used in other processes outside of the battery system) and instead, a hydrogen generator and hydrogen storage is included in the battery system to supply pure hydrogen to the anode side half-cell 41 of the rebalancing cell.

In the third embodiment according to Fig. 6, the hydrogen generated in the HER during charging is captured in the negative electrolyte tank headspace and subsequently held in the in-tank hydrogen storage unit as well as a hydrogen generator feeding the hydrogen storage unit is included in the battery system to supply pure hydrogen to the anode side half-cell 41 of the rebalancing cell.

Once the all-iron redox flow battery system reaches the fully charged state, the Fe³⁺ concentration in the positive electrolyte and the Fe²⁺ concentration in the negative electrolyte are measured, enabling a determination of the state of charge balance in the two tanks. These concentrations may be measured optically (UV-VIS) or with a calibrated electrochemical probe (using a suitable reference electrode). In an ideal all-iron redox flow battery with no side reactions, for every two mol of Fe³⁺ generated in the positive electrolyte, 2 mol of Fe²⁺ are plated out of the negative electrolyte. By comparing the concentrations of Fe²⁺ and Fe³⁺ the surplus quantity of Fe³⁺ which must be reduced to restore state of charge balance of the electrolytes is determined. A corresponding quantity of charge positive electrolyte from the positive electrolyte tank can then be transferred to the rebalancing tank, to provide enough Fe³⁺ ions which will be sent to the rebalancing cell for reduction to Fe²⁺ ions.

The electrolyte 31 in the rebalancing tank 30 is continuously circulated through the cathode half-cell 42 of the rebalancing cell 40, whereas the hydrogen created and/or collected within the headspace/buffer storage of the negative electrolyte tank is fed into the anode half-cell 41 of the rebalancing cell 40.

The electrodes of the two half cells are divided by an ion permeable membrane 43 (preferable a cation/proton exchange membrane) and connected electrically on the outside of the cell through a low resistance load. In the anode half-cell 41 of said rebalancing cell 40, the hydrogen gas H₂ is converted to two hydrogen ions (H⁺) on the surface of the electrode (coated with a catalytic material) and then transferred through the membrane 43. The electrons from this reaction are transferred to the cathode half-cell 42 where Fe³⁺ is reduced to Fe²⁺. A quantity of this rebalanced electrolyte is then returned to the positive tank 21, after it is fully rebalanced, maintaining electrolyte level and state of charge balance within the system.

A quantity of this rebalanced electrolyte may also be fed to the negative electrolyte tank 10 during the charging process. This process is required to reduce the pH of the negative electrolyte (which is rising due to the loss of H⁺ ions courtesy of the HER parasitic side reaction). Since the rebalanced electrolyte has a very low pH, even a small amount can reduce the pH of the negative electrolyte 11.

### Cleaning Cycle

During operation, the resistance of the battery stack is monitored continuously through the battery management system (e.g., by comparing the open circuit voltage to the voltage with load). When a certain threshold value for the internal resistance of the (battery) cells is hit, this triggers a flushing of both half-cells 51, 52 with a certain volume of the rebalanced electrolyte 31 from the rebalancing tank 30. The highly acidic electrolyte 31 is pumped through the cell/cells until the stack resistance decreases below a second threshold value. In doing so, precipitated Fe(OH)₃ (due to the higher pH of the negative electrolyte) located close to the membrane/separator 53 is dissolved.

In one embodiment the battery system is utilizing multiple cell-stacks and these cell-stacks are cleaned separately, enabling battery operation using the remaining stacks during cleaning. In another embodiment, one or multiple cell-stacks are all undergoing the cleaning cycle at the same time during charging. In this case the highly acidic rebalanced electrolyte from the rebalancing tank can be used as normal electrolyte and charged in the process (although with lower coulombic efficiency), mitigating any downtime of the battery.

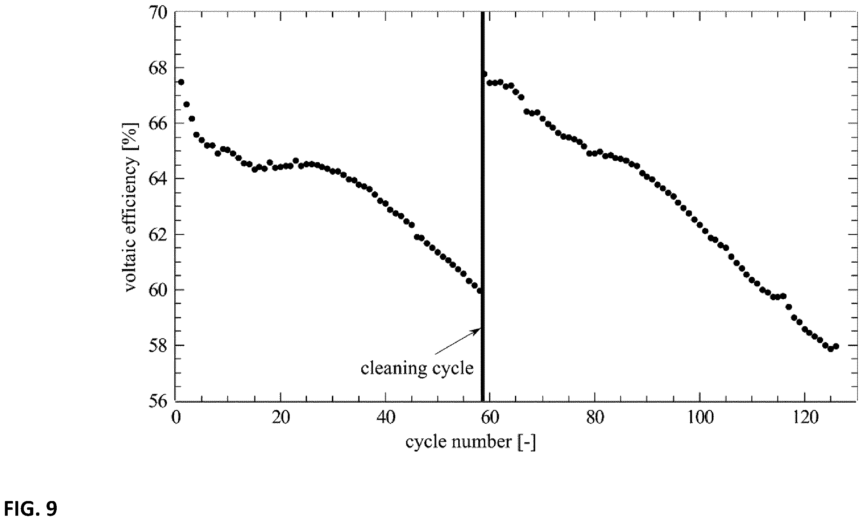

Thus being able to operate the negative half-cell and electrolyte at a controlled pH value, while keeping the separator free of Fe(OH)₃, leads to optimal performance behavior according to the invention. The Fe(OH)₃ precipitate in the negative half-cell can be removed from the membrane/separator by flushing a low pH solution through the negative half-cell. Test results indicate that a pH of less than 0.5 is required to remove Fe(OH)₃ from the separator material within 24 hours. The lower the pH, the faster the separator is cleaned. As is shown in Fig. 9, after cleaning a used negative half-cell with flushing an electrolyte at a pH of 0 for two hours, the voltage efficiency returns to its initial state. Fig. 9 shows a diagram of voltaic efficiency vs. cycle number for all-iron redox flow battery. The voltaic efficiency decreases with cycle number as Fe(OH)₃ deposits onto separator, reducing ionic conductivity. The voltaic efficiency is recovered after cleaning with electrolyte at pH = 0. Here one cycle corresponds to a complete charge and discharge cycle.

The embodiments are only exemplary and the full scope of the present invention is defined by the claims.

## Claims

1. An all-iron redox flow battery, comprising:
a first electrolyte tank (10) configured to contain a first electrolyte solution (11) and a second electrolyte tank (20) configured to contain a second electrolyte solution (21);
a flow cell (50) comprising a negative flow half-cell (51) configured for passing through the first electrolyte solution (11) and a positive flow half-cell (52) configured for passing through the second electrolyte solution (12);
a third electrolyte tank (30), distinct from the first and second electrolyte tanks (10, 20), configured to contain a third electrolyte solution (31), wherein the battery is configured to selectively provide fluid communication of the third electrolyte tank (30) with at least one of the first electrolyte tank (10) and the second electrolyte tank (20); and
a rebalancing cell (40), in particular an iron hydrogen fuel cell, comprising a negative rebalancing half-cell (41) and a positive rebalancing half-cell (42), wherein the negative rebalancing half-cell (41) is configured to receive hydrogen gas from the first electrolyte tank (10) and/or from a separate hydrogen source (60), and wherein the positive rebalancing half-cell (42) is configured for passing through third electrolyte solution (31), whereby the rebalancing cell (40) is configured to lower the pH of the third electrolyte solution (31).

2. The all-iron redox flow battery according to claim 1, wherein the battery is further configured to selectively provide fluid communication of the third electrolyte tank (30) with at least one of the negative flow half-cell (51) and the positive flow half-cell (52).

3. The all-iron redox flow battery according to claim 1 or 2, wherein, in an initial discharged state the first, second and third electrolyte solutions include iron(II)-chloride.

4. The all-iron redox flow battery according to any one of claims 1 to 3, configured to perform one or more of the following operations:
circulating the third electrolyte solution through the positive rebalancing half-cell and the third electrolyte tank; and/or
transferring a quantity of second electrolyte solution from the second electrolyte tank to the third electrolyte tank; and/or
transferring a quantity of third electrolyte solution from the third electrolyte tank to the second electrolyte tank; and/or
circulating a quantity of electrolyte solution from the third electrolyte tank to the second electrolyte tank and the same quantity of second electrolyte solution from the second electrolyte tank to the third electrolyte tank; and/or
transferring a quantity of electrolyte solution from the third electrolyte tank to the first electrolyte tank during a charging process of the all-iron redox flow battery.

5. The all-iron redox flow battery according to any one of claims 1 to 4, comprising a pH sensor (13) for monitoring a pH of the first electrolyte solution (11).

6. The all-iron redox flow battery according to any one of claims 1 to 5, comprising means to determine a state of charge imbalance between the first and second electrolyte tanks, in particular sensors (14, 24) for determining a Fe³⁺ concentration in the second electrolyte solution and a Fe²⁺ concentration in the first electrolyte solution.

7. The all-iron redox flow battery according to any one of claims 1 to 6, comprising further flow cells forming a stack of flow cells, and comprising means to monitor an electrical resistance of the stack of flow cells, wherein the all-iron redox flow battery is configured to transfer third electrolyte to the negative flow half-cells and to the positive flow half-cells if the resistance is equal or lager that a predefined threshold.

8. The all-iron redox flow battery according to claim 7, comprising further stacks of flow cells, wherein the all-iron redox flow battery is configured to separately transfer third electrolyte to each stack of flow cells.

9. The all-iron redox flow battery according to any one of claims 1 to 8, comprising a monitoring and control system (90) configured to monitor physical parameters of at least one of the first, second and third electrolyte solution, such as pH, Fe²⁺ concentration, Fe³⁺ concentration, stack resistance, and configured to control circulating and transferring operations of the solutions in response to values of the monitored parameters.

10. A method of operating an all-iron redox flow battery, comprising:
providing a first electrolyte tank containing a first electrolyte solution and a second electrolyte tank containing a second electrolyte solution;
passing first electrolyte solution through a negative flow half-cell of a flow cell and passing second electrolyte solution through a positive flow half-cell of the flow cell;
providing a third electrolyte tank, distinct from the first and second electrolyte tanks, and containing a third electrolyte solution;
providing a rebalancing cell comprising a negative rebalancing half-cell and a positive rebalancing half-cell, and receiving hydrogen gas from the first electrolyte tank and/or from a separate hydrogen source by the negative rebalancing half-cell, and selectively passing third electrolyte solution through the positive rebalancing half-cell, thereby lowering a pH of the third electrolyte; and
selectively providing fluid communication of the third electrolyte tank with at least one of the first electrolyte tank and the second electrolyte tank.

11. The method according to claim 10, further comprising selectively providing fluid communication of the third electrolyte tank with the negative flow half-cell and the positive flow half-cell.

12. The method according to claim 10 or 11, further comprising one or more of the following steps:
transferring a quantity of second electrolyte from the second electrolyte tank to the third electrolyte tank; and/or
transferring a quantity of third electrolyte from the third electrolyte tank to the second electrolyte tank; and/or
circulating a quantity of electrolyte from the third electrolyte tank to the second electrolyte tank and the same quantity of second electrolyte from the second electrolyte tank to the third electrolyte tank.

13. The method according to any one of claims 10 to 12, further comprising
monitoring the pH of the first electrolyte solution during a charging process of the all-iron redox flow battery, and if the pH is at or above a threshold value, transferring a quantity of electrolyte from the third electrolyte tank to the first electrolyte tank.

14. The method according to any one of claims 10 to 13, further comprising
determining a state of charge imbalance between the first and second electrolyte tanks, in particular including measuring a Fe³⁺ concentration in the second electrolyte solution and a Fe²⁺ concentration in the first electrolyte solution and, based on the determined state of charge imbalance, transferring a corresponding quantity of second electrolyte from the second electrolyte tank to the third electrolyte tank and transferring an equal amount of the third electrolyte from the third electrolyte tank to the second electrolyte tank to achieve a state of charge balance between the first and second electrolyte tanks.

15. The method according to any one of claims 10 to 14, further comprising
monitoring an electrical resistance of one or more stacks of flow cells, and transferring third electrolyte to the negative flow half-cells and to the positive flow half-cells if the resistance is equal or lager that a predefined threshold, in particular separately transferring third electrolyte to each stack of flow cells.
